# EUROPÄISCHE PATENTANMELDUNG

(11) **EP 2 106 947 A1**
(43) Veröffentlichungstag der Anmeldung: **07.10.2009**
(21) Anmeldenummer: 09156256.1
(22) Anmeldetag: 26.03.2009
(51) Int. Cl.: B60J 7/06

(54) **Verdeckanordnung für Nutzfahrzeuge**

(30) Priorität: 31.03.2008 DE 102008000899
(71) Anmelder: TSE Trailer-System-Engineering GmbH & Co. KG, 72365 Ratshausen (DE)
(72) Erfinder: Boll, Uwe, 72348, Rosenfeld-Leidringen (DE)
(74) Vertreter: Weber, Gerhard

(57) **Zusammenfassung**

Für eine Verdeckanordnung für Nutzfahrzeuge mit Bügelscherenanordnungen, deren Scherenbügel in Scherengelenkanordnungen miteinander und in Bügelgelenkanordnungen mit Querbügelanordnungen gelenkig verbunden sind, werden vorteilhafte Ausgestaltungen der Gelenkanordnungen mit paarweise eingesetzten Gelenkkörpern beschrieben.

## Beschreibung

Die Erfindung betrifft eine Verdeckanordnung für Nutzfahrzeuge.

Um bei Nutzfahrzeugen mit durch ein Verdeck abgeschlossenem Laderaum diesen zur Be- oder Entladung auch von oben zugänglich zu machen, sind Verdeckanordnungen gebräuchlich, bei welchem Laderaum eine Mehrzahl von Laufwagenanordnungen in Längsführungen von insbesondere seitlich beabstandeten Dach-Längsholmen relativ zueinander verschiebbar geführt sind. Zwischen benachbarten Laufwagenanordnungen sind jeweils Bügelscherenanordnungen gelenkig mit den Laufwagenanordnungen gekoppelt, welche durch Relativverfahrung benachbarter Laufwagenanordnungen zwischen einer Streckstellung bei maximalem Abstand und einer aufgerichteten Stellung bei minimalem Abstand benachbarter Laufwagenanordnung verlagerbar sind. In der Streckstellung der Bügelscherenanordnungen verläuft eine flexible Dachplane, welche durch die Bügelscherenanordnungen und die Laufwagenanordnungen mit dem Laderaum quer zur Verschieberichtung überspannenden Querbügeln abgestützt ist, im wesentlichen eben. Beim Zusammenschieben benachbarter Laufwagenanordnungen und damit verbundenem Aufrichten der Bügelscherenanordnungen wird die Plane aufgefaltet. Die Bügelscherenanordnungen enthalten typischerweise jeweils ein Paar von Scherenbügeln, welche mittels erster Gelenkanordnungen mit den Laufwagenanordnungen und mittels zweiter Gelenkanordnungen in einem Scherengelenk miteinander verbunden sind. Derartige Verdeckanordnungen sind beispielsweise bekannt aus der DE2436794A1 oder der DE3137437C2.

Die DE69702305T2 und die DE29815722U1 zeigen Verdeckanordnungen, bei welchen zwischen aufeinander folgenden Laufwagenanordnungen durchgehende Kunststoffbänder mit Filmscharnieren die Funktion der Bügelscherenanordnungen übernehmen.

Besondere Ausführungen von Bügelscherenanordnungen in solchen Verdeckanordnungen sind beispielsweise aus der DE10056050A1 bekannt, wo zwei gleiche Scheren bügel aus einem gebogenen Draht mit Endabschnitten in Lageröffnungen der Laufwagenanordnungen eingreifen und im Scherengelenk über gewendelt gebogene Drahtabschnitte unmittelbar miteinander verbunden sind.

Die EP1122108A2 zeigt Bügelscherenanordnungen, bei welchen ein flacher Blechkörper relativ zu einem ersten von zwei Drahtbügeln verschiebbar ist und für den zweiten Drahtbügel das Scherengelenk bildet. Der Blechkörper ist in der Streckstellung der Bügelscherenanordnung maximal von dem ersten Drahtbügel weg gezogen und wird beim Zusammenschieben benachbarter Laufwagenanordnungen weiter auf den ersten Bügel aufgeschoben. Bei der nachfolgenden Aufstellung der Bügelscherenanordnung wird dadurch die Höhe der Bügelschere verringert, wodurch eine Spannbelastung der Plane verringert werden soll. In anderer Ausführung wird dies dadurch erreicht, dass ein die Drahtschenkel der Scherenbügel im Scherengelenk verbindender Scherengelenkkörper aus weichem elastisch längenveränderlichem Material besteht.

An den Querbügelanordnungen sind die Scherenbügel in der Weise befestigt, dass die Enden der Drahtbügel als Lagerzapfen horizontal umgebogen sind und in Lageraussparungen von zwei auf der Oberseite der Laufwagenkonsolen befestigten Lagerplatten einliegen.

In der DE9200417U1 sind als Flachstäbe ausgeführte Scherenbügel an einem quer zur Verschieberichtung von dem Laufwagen abstehenden Bolzen angelenkt und im Scherengelenk sind zwei Scherenbügel unmittelbar miteinander verbunden. Bei einer Anordnung aus der DE9012980U1 sind gleichfalls Flachstäbe als Scherenbügel an einem gemeinsamen Gelenkbolzen eines Laufwagens angelenkt. Im Scherengelenk bilden zwei an einem anhebbaren Querbügel befestigte Winkel getrennte Schwenklager für die beiden Bügel einer Bügelschere.

Die EP778169B1 zeigt ein Planenverdeck, bei welchem Schwenkbügel als flache Leisten ausgeführt sind, welche an ihren Enden durch umgebogene Fortsätze Gelenkösen bilden, die etwa mittig zur Breite der Leisten liegen und kurz gegen die Leistenbreite sind. Eine gelenkige Verbindung zu den Querbügelanordnungen erfolgt über Lagerzapfen, welche in von den Laufwagenkonsolen einteilig fortgesetzten Sattelplatten gehalten sind. In dem Scherengelenk bildet ein Lagerzapfen eines anhebbaren Querbügels eine gemeinsame Gelenkachse für die Ösen der beiden miteinander zu verbindenden Scherenbügel.

Der vorliegenden Erfindung liegt die Aufgabe zugrunde, eine Verdeckanordnung für Nutzfahrzeuge anzugeben, welche insbesondere vorteilhafte Bügelscherenanordnungen aufweist.

Die Erfindung ist im Patentanspruch 1 beschrieben. Die abhängigen Ansprüche enthalten vorteilhafte Ausgestaltungen und Weiterbildungen der Erfindung.

Die Ausführung der in den Bügelgelenkanordnungen eingesetzten Bügelgelenkkörper und/oder der in den Scherengelenkanordnungen eingesetzten Scherengelenkkörper mit Bügelgelenkstutzen bzw. Scherengelenkstutzen, welche von axial entgegen gesetzten Seiten in eine Bügelgelenkbuchse bzw. eine Scherengelenkbuchse eingreifen, ergibt eine stabile und insbesondere in der Montage besonders einfache Gestaltung der Bügelgelenkanordnungen bzw.

Scherengelenkanordnungen. Die Bügelgelenkkörper bzw. die Scherengelenkkörper sind vorzugsweise als Kunststoff-Spritzgussteile ausgeführt. Die einander zuweisenden Gelenkstutzen sind vorzugsweise über in axialer Richtung ineinander eingreifende und radial sperrende Zentrierstruktukren an ihren einander zuweisenden Enden verbunden, wobei solche Zentrierstrukturen vorzugsweise durch einen über zumindest den überwiegenden Teil der kumulierten Länge der zusammenwirkenden Gelenkstutzen verlaufenden Bolzen gebildet sein können. Ein solcher Bolzen kann bei Ausführung der Bügelgelenkkörper bzw. Scherengelenkkörper als Kunststoff-Spritzgussteile vorteilhafterweise bei der Herstellung des Spritzgussteils in einen an diesem ausgebildeten Gelenkstutzen eingegossen werden.

Vorzugsweise sind die Gelenkbuchsen an dem Scherenbügel für die Anbindung in der Bügelgelenkanordnung gleich ausgebildet wie für die Anbindung in der Scherengelenkanordnung. In entsprechender Art sind vorteilhafterweise die Gelenkstutzen in den Bügelgelenkkörpern einerseits und den Scherengelenkkörpern andererseits gleich dimensioniert, so dass bei der Montage des Scherenbügels nicht zwischen unterschiedlich ausgebildeten oder angeordneten Gelenkbuchsen für die Bügelgelenkanordnung oder die Scherengelenkanordnung unterschieden werden muss. Insbesondere kann für die beiden Scherenbügel einer Bügelscherenanordnung eine einheitliche Form für beide Scherenbügel benutzt werden.

Vorteilhafterweise sind die in einer Bügelgelenkanordnung paarweise eingesetzten Bügelgelenkkörper auch innerhalb eines Paares baugleich, so dass nur eine Ausführung von Bügelgelenkkörpern benötigt wird. In entsprechender Art sind vorteilhafterweise die paarweise in den Scherengelenkanordnungen eingesetzten Scherengelenkkörper auch innerhalb eines Paares von Scherengelenkkörpern gleich aufgebaut, so dass auch nur eine Bauform von Scherengelenkkörpern benötigt wird.

Vorteilhafterweise enthalten sowohl die Bügelgelenkkörper als auch die Scherengelenkkörper jeweils zwei Gelenkstutzen zur Ausbildung von zwei quer zur Achsenrichtung voneinander beabstandeten Gelenkachsen in den jeweiligen Gelenkanordnungen und bilden vorteilhafterweise für jeden Bügel eine getrennte Anlenkung. Der Scherenbügel ist vorteilhafterweise um eine senkrecht auf der Ebene seiner beiden Schwenkachsen stehende Symmetrieachse um 180° drehsymmetrisch und kann so ohne Unterscheidung der Gelenkbuchsen in zwei gleichwertigen Einbaulagen montiert werden, was den Montagevorgang erheblich vereinfacht.

Die Bügelgelenkkörper können vorteilhafterweise auf den Querbügelanordnungen, insbesondere einem zwischen zwei Laufwagenabschnitten einen Laderaum überbrückenden Mittelteil befestigt sein. Vorteilhafterweise sind hierfür Zentrierstrukturen zwischen Bügelgelenkkörper und Querbügelanordnung ausgebildet, wobei insbesondere in der Querbügelanordnung Bohrungen vorbereitet sein können, in welche Zentrierelemente der Bügelgelenkkörper eingreifen, wenn diese auf der Querbügelanordnung befestigt werden. Die Befestigung erfolgt vorteilhafterweise werkzeuglos, wobei insbesondere ein Einrasten eines quer zur Aufsteckrichtung verlaufenden Fortsatzes des Bügelgelenkkörpers hinter eine Kante der Querbügelanordnung vorgesehen sein kann.

Die in der Schwenkgelenkanordnung gegebene erste Schwenkachse liegt vorteilhafterweise tiefer als die Oberseite der Querbügelanordnung, insbesondere deren Mittelteil, auf welcher die Plane in gestrecktem Zustand aufliegt. Die erste Schwenkachse bzw. die beiden ersten Schwenkachsen der beiden Bügelgelenkachsen eines Paares von Bügelgelenkkörpern liegen vorteilhafterweise auf entgegen gesetzten Seiten der Querbügelanordnung neben dieser.

In der Scherengelenkanordnung sind die paarweise eingesetzten Scherenbügelkörper vorteilhafterweise in axialer Richtung miteinander formschlüssig verbunden, wofür in bevorzugter Ausführungsform die beiden Scherengelenkkörper komplementäre Rastverbindungen, beispielsweise in Form von Rasthaken und korrespondierenden Nuten aufweisen, welche beim Zusammenfügen der beiden Scherengelenkkörper in axialer Richtung miteinander in Eingriff treten und die beiden Scherengelenkkörper formschlüssig sicher verbinden. Vorteilhafterweise bilden die Scherengelenkkörper in ihrer paarweisen Verwendung zwei quer zur Achsrichtung beabstandete und je einem der beiden Scherenbügel zugeordnete Scherengelenkachsen.

In der Scherengelenkanordnung und/oder in der Bügelgelenkanordnung kann vorgesehen sein, dass zwei in Richtung der jeweiligen Schwenkachse fluchtende Gelenkbuchsen an dem Scherenbügel ausgebildet sind, welche jeweils mit einem Paar von Scherengelenkkörpern bzw. Bügelgelenkkörpern zur Bildung der Scherengelenkanordnung bzw. Bügelgelenkanordnung zusammenwirken. Hierdurch ergibt sich vorteilhafterweise eine breite Abstützungsbasis für den Scherenbügel, welcher vorteilhafterweise aus einem dünnen Blech mit einer Blechdicke von < 1 mm, vorzugsweise < 0,5 mm, gegebenenfalls mehrlagig, geformt sein kann. Der axiale Abstand solcher zweier miteinander fluchtender Gelenkbuchsen an dem Scheren bügel ist vorteilhafterweise größer als die axiale Länge der einzelnen Gelenkbuchsen. Die Länge der beabstandeten Gelenkbuchsen beträgt dabei vorteilhafterweise wenigstens 15 %, insbesondere wenigstens 20 % der Breite des Scheren bügels in Richtung der Schwenkachsen der Gelenkanordnungen.

Die Scherengelenkkörper enthalten vorteilhafterweise eine das Scherengelenk mit den Gelenkbuchsen in den Gelenkanordnungen überdeckende, von einem Mitteltteil des Scherengelenkkörpers beidseitig überstehende Deckplatte, welche mit ihrer Oberseite eine Auflagefläche für die flexible Verdeckplane bildet.

Vorteilhafterweise bilden die Bügelgelenkkörper und/oder die Scherengelenkkörper Begrenzungsanschläge für die Bewegung der Bügelscherenanordnung in die Streckstellung, so dass in der Streckstellung vorteilhafterweise immer eine leichte Voranwinkelung der beiden verbundenen Scherenbügel in der Scherengelenkanordnung nach oben gegeben ist. Hierfür weisen vorteilhafterweise die Bügelgelenkkörper erste Gegenflächen auf, an welchen im gestreckten Zustand der Bügelscherenanordnung erste Anschlagflächen der Scherenbügel anliegen. Die Scherengelenkkörper weisen zweite Gegenflächen auf, an welchen zweite Anschlagflächen der Scherenbügel in der Streckstellung der Bügelscherenanordnung anliegen. Die zweiten Gegenflächen können insbesondere durch die Unterseite einer Deckplatte der Scherengelenkkörper gegeben sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Seitenansicht einer Verdeckanordnung mit Bügelscherenanordnungen in zwei Endpositionen,
- Fig. 2: eine vorteilhafte Ausführung eines Scherenbügels,
- Fig. 3: Bügelgelenkkörper in zwei verschiedenen Ansichten,
- Fig. 4: Scherengelenkkörper in zwei verschiedenen Ansichten,
- Fig. 5: eine Bügelscherenanordnung in zwei Schrägansichten.

In den nachfolgend erläuterten Abbildungen sind teilweise Koordinatenachsen eines rechtwinkligen xyz-Koordinatensystems mit eingezeichnet, wobei x die in normaler Betriebsstellung horizontale Längsrichtung, y die horizontale Querrichtung und z die Vertikale bezeichnen.

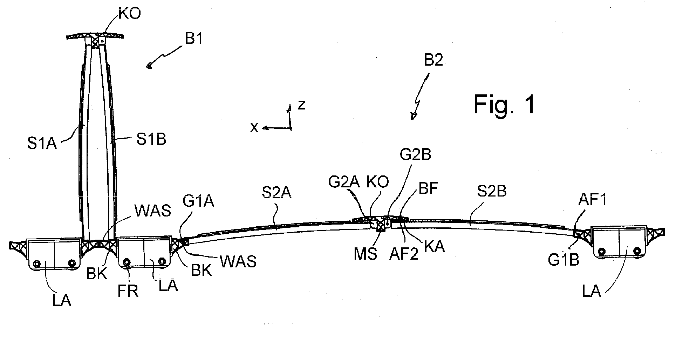

Fig. 1 zeigt in einer Seitenansicht die wesentlichen mechanischen Komponenten einer Faltverdeckanordnung. Mehrere Laufwagenanordnungen LA sind entlang von nicht mit eingezeichneten Längsführungen, insbesondere seitlich beabstandeten Dachholmen eines Fahrzeug-Laderaums in x-Richtung relativ zueinander und relativ zu den Längsführungen verschiebbar. Eine Verdeckplane ist gleichfalls nicht mit eingezeichnet. Eine erste Bügelscherenanordnung B1 mit Scherenbügeln S1A und S1 B ist in einer vollständig aufgerichteten Stellung, in welcher der Längsabstand der diese Scherenbügel tragenden Laufwagenanordnungen minimal ist, dargestellt, wogegen die zweite Bügelscherenanordnung B2 mit Scherenbügeln S2A und S2B in einer zweiten Endstellung, in welcher die Scherenbügel eine maximal gestreckte Stellung einnehmen und der Abstand der die Scherenbügel S2A, S2B tragenden Laufwagenanordnungen in Längsrichtung maximal ist, gezeichnet ist. In der aufgerichteten Stellung der Bügelscherenanordnungen nach Art der Bügelscherenanordnung B1 sind die Laufwagenanordnungen und Bügelscherenanordnungen typischerweise in den Front-Dachbereich eines Fahrzeug-Laderaums verschoben und geben den größten Teil der Dachöffnung für Be- und Entladevorgänge frei. Die Plane ist aufgefaltet und liegt zwischen benachbarten Bügelscherenanordnungen und auf den nach oben weisenden Flächen der Scherengelenkkörper KO auf. Bei geschlossenem Laderaumdach befinden sich die Bügelscherenanordnungen nach Art der Bügelscherenanordnung B2 in ihrer gestreckten Stellung und die flexible Verdeckplane liegt auf den Laufwagenanordnungen LA und typischerweise auf quer zur Längsrichtung den Laderaum überspannenden Querbügelanordnungen sowie auf den nach oben weisenden Flächen der Scherenbügel S2A, S2B und der Scherengelenkkörper KO auf.

Die Scherenbügel S2A, S2B sind um erste Schwenkachsen G1A, G1 B schwenkbar an Bügelgelenkkörpern BK angelenkt, welche an den Laufwagenanordnungen bzw. den solche in Querrichtung verbindenden Querbügelanordnungen befestigt sind. Den Bügelgelenkkörpern BK abgewandt sind die Scherenbügel um zweite Schwenkachsen G2A, G2B schwenkbar in Scherengelenkanordnungen mit den Scherengelenkkörpern KO gelenkig verbunden. Um beim Zusammenschieben der Laufwagenanordnungen ein zuverlässiges Aufrichten der gestreckten Scherenbügelanordnung in die aufgerichtete Position zu gewährleisten, sollten in der gestreckten Stellung die zweiten Schwenkachsen G2A, G2B um ein geringes Maß oberhalb der durch die ersten Schwenkachsen G1A, G1B gebildeten Ebene liegen. Hierfür liegen die Scherenbügel S2A, S2B mit ersten Anschlagflächen AF1 an ersten Gegenflächen WAS der Bügelgelenkkörper BK und mit zweiten Anschlagflächen AF2 an zweiten Gegenflächen KA der Scherengelenkkörper KO an und stützen die Scherenbügel in der gestreckten Stellung ab.

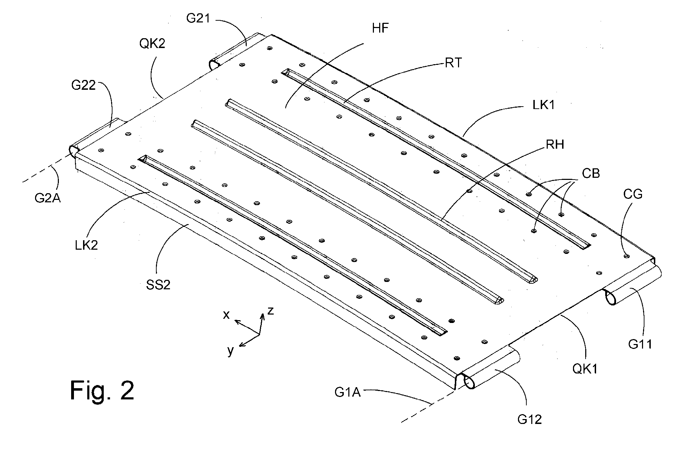

Fig. 2 zeigt ein bevorzugtes Beispiel eines Scherenbügels, welcher im skizzierten Beispiel vorteilhafterweise aus einem einteiligen umgeformten Blechteil besteht. Dieses Blechteil besitzt eine große Hauptfläche HF, welche im skizzierten vorteilhaften Beispiel im wesentlichen rechteckig mit Längskanten LK1, LK2 und Querkanten QK1, QK2 gestaltet ist. Von der Hauptfläche erstrecken sich vorzugsweise einteilig Blechabschnitte über die Querkanten hinaus und sind dort zu ersten Gelenkhülsen G11, G12 bzw. zweiten Gelenkhülsen G21, G22 umgeformt. Die umgeformten Blechabschnitte sind vorteilhafterweise unter die Fläche der Hauptfläche HF zurückgeführt. Vorteilhafterweise kann das Blechteil aus einem relativ dünnem Blech, vorzugsweise mit einer Blechstärke von wenigster als 1 mm, insbesondere weniger als 0,5 mm aufgefaltet sein, wobei Teilbereiche mit mehreren flächig aneinander liegenden Blechlagen vorgesehen sind, welche insbesondere in der Hauptfläche bei den Längskanten LK1, LK2 liegen können. Die mehreren Blechlagen können vorteilhafterweise in der Fläche verbunden sein, insbesondere durch formschlüssige Verbindung über Clinch-Verbindungen CB. Die Gewindebuchsen sind dann vorteilhafterweise durch Blechabschnitte mit wenigstens zwei Blechlagen gebildet, welche bei Rückführung unter die Hauptfläche zu einem Teilbereich mit vier Blechlagen führen, welche über Clinch-Verbindungen CG verbunden sein können. Zur weiteren Aussteifung des Scherenbügels können die Seitenkanten der Hauptfläche von dieser weg umgebogen sein und Seitenstreifen SS bilden und/oder können in der Hauptfläche erhabene oder vertiefte Strukturen beispielsweise in der Form von Sicken RH bzw. RT vorgesehen sein. Anstelle eines in Teilbereichen mehrlagigen Blechteils kann in anderer vorteilhafter Ausführung die Verwendung eines Blechteils mit nur einer Blechlage vorgesehen sein, wobei zur Gewichtsverringerung auch einzelne Teilbereiche nach Art von sogenannten "tailored blanks" verschiedene Blech-Wandstärken aufweisen können oder einzelne Teilbereiche Flächenaussparungen aufweisen.

Die ersten Gelenkbuchsen G11, G12 sind entlang einer ersten Schwenkachse G1A fluchtend ausgerichtet. Die beiden ersten Gelenkbuchsen sind in Richtung der Schwenkachse G1A voneinander beabstandet und in Richtung der Schwenkachse G1A nahe bei den jeweiligen Längskanten LK1, LK2 der Hauptfläche angeordnet. Der gegenseitige Abstand der beiden ersten Gelenkbuchsen G11, G12 ist vorteilhafterweise größer als die Länge der einzelnen Gelenkbuchsen G11, G12 in Richtung der Schwenkachse G1A. Die Länge der einzelnen Gelenkbuchsen beträgt vorteilhafterweise wenigstens 15 %, insbesondere wenigstens 20 % der Breite der Hauptfläche in Richtung der Schwenkachse G1A.

Für die beiden zweiten Gelenkbuchsen G21 und G22, welche entlang einer zweiten Schwenkachse G2A fluchtend ausgerichtet und vorteilhafterweise gleich wie die beiden ersten Gelenkbuchsen aufgebaut sind, gelten in vorteilhafter Ausführung dieselben Bemaßungsangaben wie vorstehend für die beiden ersten Gelenkbuchsen G11, G12 ausgeführt ist. Hierdurch kann vorteilhafterweise der Scherenbügel in zwei Baulagen gleichwertig eingebaut werden, welche sich durch eine Drehung des Scherenbügels um eine Flächenmittennormale der Hauptfläche erfolgenden Drehung um 180° unterscheiden. Vorteilhafterweise bildet eine solche Flächenmittennormale eine zweizählige Drehsymmetrieachse für den Scherenbügel. Der Scherenbügel kann auch im wesentlichen spiegelsymmetrisch ausgebildet sein.

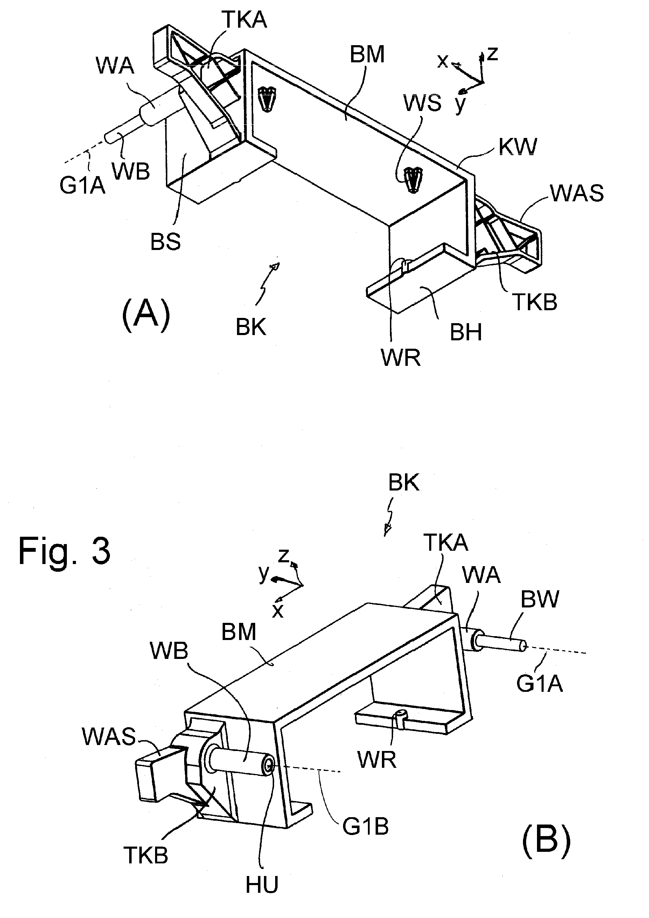

Fig. 3 zeigt eine vorteilhafte Ausführung von Bügelgelenkkörpern, welche zur Bildung von Bügelgelenkanordnungen mit ersten Gelenkbuchsen eines Scherenbügels zusammen wirken und jeweils paarweise eingesetzt sind. Die Bügelgelenkkörper BK sind vorteilhafterweise in der paarweisen Verwendung identisch aufgebaut, so dass lediglich eine Bauform eines solchen Bügelgelenkkörpers vorgehalten werden muss und auch die Montage vereinfacht wird, weil keine Differenzierung zwischen verschiedenen Bügelgelenkkörpern erforderlich ist. Fig. 3 zeigt einen solchen Bügelgelenkkörper in einer Ansicht von schräg unten (A) und einer Ansicht von schräg oben (B).

Der Bügelscherenkörper BK besitzt eine der jeweiligen Querbügelanordnung, auf welcher der Bügelscherenkörper befestigt wird, angepaßte Grundform, welche im vorliegenden Fall für einen rechteckigen Umriß des Querschnitts einer Querbügelanordnung eine einen mittleren Abschnitt BM bildende obere Platte mit Seitenplatten BS und an deren unteren Ende vorspringenden Abschnitten BH umfasst. Die Form des Bügelgelenkkörpers BK ist insbesondere dafür geeignet, dass unter Aufbiegen der skizzierten Klammerform der Bügelgelenkkörper, vorzugsweise Werkzeuglos, von oben über die Querbügelanordnung aufgesteckt wird und nach Rückkehr in die skizzierte Form die Abschnitte BH Unterkanten der Querbügelanordnung untergreifen und den Bügelgelenkkörper sicher auf der Querbügelanordnung halten. Zur Positionierung entlang der Querbügelanordnung in y-Richtung können vorteilhafterweise Zentrierelemente WS vorgesehen sein, welche in korrespondierende Bohrungen der Oberseite der Querbügelanordnung eingreifen. Zur Sicherung des Bügelgelenkkörpers können zusätzliche Rastelemente WR in Bohrungen an der Unterseite der Querbügelanordnung eingreifen. Die Grundform ist abhängig von dem Querschnitt der Querbügelanordnung und daher im skizzierten Beispiel lediglich als schematisch zu verstehen.

In Längsrichtung x auf entgegen gesetzten Seiten des Bügelgelenkkörpers BK sind Trägerkörper TKA, TKB vorgesehen, welche bei bevorzugter Ausführung des Bügelgelenkkörpers BK als Kunststoff-Spritzgussteil einteilig mit der Grundform ausgeführt sind. Trägerkörper TKA, TKB tragen in y-Richtung weisend Bügelgelenkstutzen WA bzw. WB, welche im montierten Zustand entlang zweier erster Schwenkachsen G1A, G1B verlaufen.

Ein erster Gelenkstutzen WA an dem ersten Trägerkörper TKA enthält einen Bolzen BW, welcher über das dem Trägerkörper TKA abgewandte Ende des ersten Gelenkstutzens WA hinausragt. Der Bolzen BW ist vorteilhafterweise bei der Herstellung des Bügelgelenkkörpers als Spritzgussteil beim Spritzvorgang in den ersten Gelenkstutzen WA eingebettet. Der zweite Gelenkstutzen WB weist von seinem dem Trägerkörper TKB abgewandten Ende her eine Aussparung HU auf, welche auf den überstehenden Teil eines Bolzens BW in der Dimension und Ausrichtung abgestimmt ist.

Zwei gleichartige Gelenkkörper sind in um 180° verdrehter Ausrichtung mit ihren Gelenkstutzen von entgegen gesetzten Seiten in erste Gelenkbuchsen von Scherenbügeln einsteckbar, wobei die freien Enden der Bolzen BW jeweils auf die Öffnungen HU treffen und in diese eingeschoben werden. Die Gelenkstutzen WA, WB ergänzen sich dann in Richtung der Schwenkachsen G1A, G1 B zu im wesentlichen durchgehenden Gelenkachsen mit dem Durchmesser der Gelenkstutzen, deren Trennstellen durch die Bolzen BW überbrückt sind. Die Bolzen BW erstrecken sich dabei vorteilhafterweise über die zumindest überwiegende Länge der durch die Gelenkstutzen WA, WB gebildeten Gelenkachsen, vorzugsweise über deren gesamte Länge.

Die unter Einschluss der ersten Gelenkbuchsen der Scherenbügel paarweise zusammengefügten Bügelgelenkkörper halten die zusammen gefügte Position typischerweise allein durch kraftschlüssige Verbindung über die Bolzen BW für den weiteren Montagevorgang. Die Bügelgelenkkörper BK werden nach dem paarweisen Zusammenfügen auf den Querbügelanordnungen befestigt, beispielsweise in der beschriebenen Weise aufgesteckt und sind dann über die Befestigung auf den Querbügelanordnungen, beispielsweise die Zentrierstrukturen WS in definierter Position gehalten, so dass sich die beim paarweisen Zusammenfügen ergebenden Bügelgelenkanordnungen nicht mehr lösen können.

An den Trägerkörpern TKA, TKB sind vorteilhafterweise erste Gegenflächen WAS ausgebildet, welche im gestreckten Zustand der Bügelscherenanordnungen mit ersten Anschlagflächen der Scherenbügel zusammen wirken und deren Verschwenkung nach unten begrenzen.

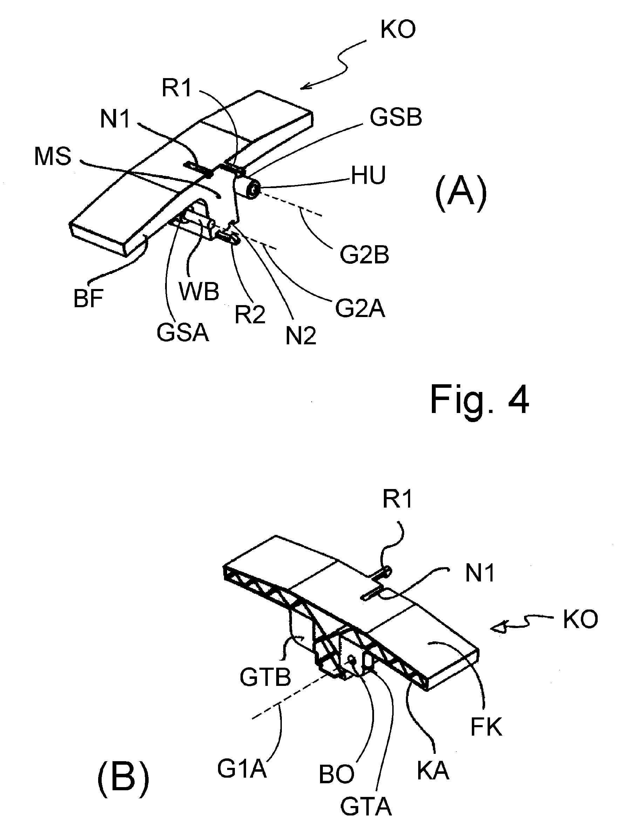

Fig. 4 zeigt eine vorteilhafte Ausführung eines Scherengelenkkörpers in zwei verschiedenen Schrägansichten. Der Scherengelenkkörper ist vorteilhafterweise als einteiliges Kunststoff-Spritzgussteil hergestellt und besitzt eine Form, welche eine paarweise Verbindung zweier identischer Scherengelenkkörper in einer Scherengelenkanordnung erlaubt. Der Scherengelenkkörper enthält zwei Trägerkörper GTA, GTB, an welchen Gelenkstutzen GSA bzw. GSB befestigt, insbesondere angeformt sind. Ein erster Gelenkstutzen GSA enthält wiederum einen Bolzen BO, welcher über das dem Trägerkörper GTA abgewandte Ende des Gelenkstutzens GSA hinausragt. Ein zweiter Gelenkstutzen GSB enthält wiederum eine Vertiefung HU, welche auf das überstehende Ende des Bolzens BE in der Dimension und Ausrichtung abgestimmt ist. Zwei identisch aufgebaute Scherengelenkkörper der skizzierten Art lassen sich in relativ zueinander um 180° verdrehter Position unter Einschluss von zweiten Gelenkbuchsen der Scherenbügel zu einer Gelenkanordnung zusammen fügen, in welcher wiederum Gelenkstutzen der beiden zusammen gefügten Scherengelenkkörper sich in Richtung zweiter Schwenkachsen G2A, G2B ergänzen und die Trennstellen zwischen miteinander fluchtenden und sich ergänzenden Gelenkstutzen durch die Bolzen BO überbrückt sind. Die Gewindestutzen GSA, GSB werden dabei von entgegen gesetzten Seiten in axialer Richtung in Gewindebuchsen der Scherenbügel eingesteckt.

Um die unter Bildung einer Gelenkanordnung in axialer Richtung paarweise zusammen gefügten Scherengelenkkörper in ihrer zusammengefügten Position zu halten, können an sich beliebige bekannte Verbindungsmittel vorgesehen sein. Besonders vorteilhaft ist die Ausbildung von Raststrukturen an den im montierten Zustand einander zuweisenden Seiten der Scherengelenkkörper, wobei solche Raststrukturen komplementär zueinander ausgeführt sind und beispielsweise Rastvorsprünge R1 und Nuten N1, Rastvorsprünge R2 und Nuten N2 enthalten, welche beim Zusammenfügen zweier Scherengelenkkörper elastisch nachgebend ineinander rasten und eine sichere axiale Verbindung der zusammen gefügten Scherengelenkkörper gewährleisten.

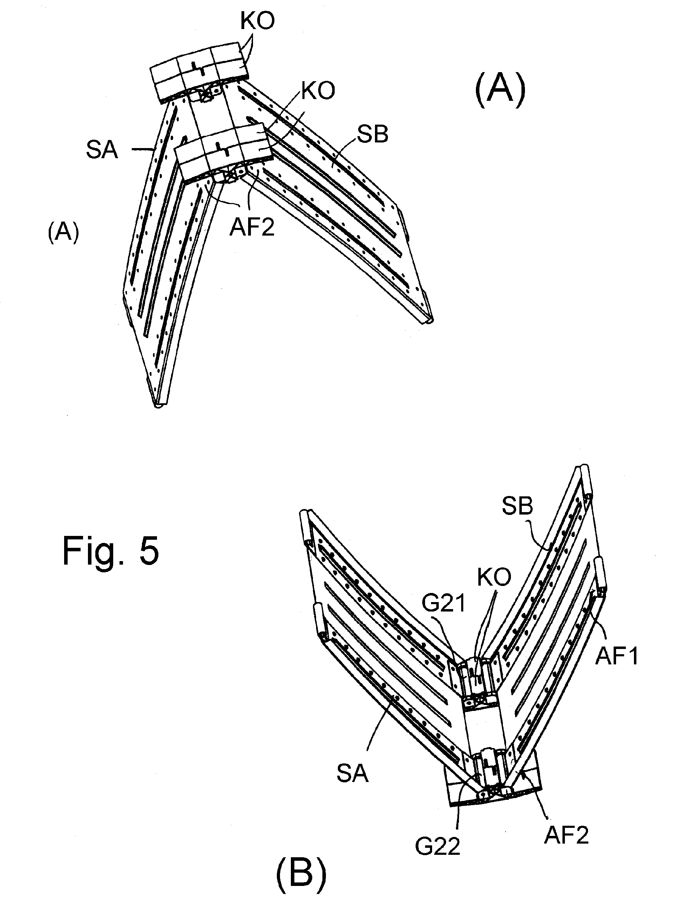

Bei der bevorzugten Ausführung des Scherenbügels mit zwei in Richtung der Schwenkachse beabstandeten zweiten Gewindebuchsen G21, G22 entstehen in jeder Bügelscherenanordnung zwei gleichartige Scherengelenkanordnungen, in welchen jeweils paarweise zusammengefügte Scherengelenkkörper vorliegen. Fig. 5 zeigt eine Ansicht eines mit zwei derartigen Scherengelenkanordnungen verbundenen Scherenbügelpaares in Ansicht von schräg oben. Die nach oben weisenden Flächen FK der paarweise zusammen gefügten Scherengelenkkörper ergänzen sich zu jeweils einer durchgehenden Fläche.

Fig. 5B zeigt die Anordnung nach Fig. 5A in Ansicht von schräg unten mit Blick auf die Scherengelenkanordnungen mit den zweiten Gewindebuchsen G21, G22.

Zur Begrenzung der Schwenkbewegung der Scherenbügel in die gestreckte Stellung weisen die Scherengelenkkörper vorteilhafterweise von einem Mittelteil MS seitlich weg weisende Arme BF der Deckplatte auf, an deren Unterseiten KA bei Erreichen der Streckstellung zweite Anschlagflächen AF2 der Scherenbügel anliegen und sich an diesen zweiten Gegenflächen KA abstützen. Die Rastverbindungen befinden sich vorteilhafterweise im Bereich des Mittelteils, so dass elastische Verformungen der abstehenden Arme BF bei Belastung der Scherengelenkanordnung in der gestreckten Stellung im wesentlichen nicht auf die Raststrukturen wirken.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verdeckanordnung für Nutzfahrzeuge mit einer Mehrzahl von in seitlich beabstandeten Längsführungen verschiebbaren Querbügelanordnungen und zwischen benachbarten Querbügelanordnungen angeordneten Bügelscherenanordnungen, welche jeweils zwei Scherenbügel enthalten, wobei ein Scherenbügel über eine Bügelgelenkanordnung um eine erste Schwenkachse gelenkig mit einer Querbügelanordnung und über ein Scherengelenkanordnung um eine zweite Schwenkachse gelenkig mit dem anderen Scherenbügel verbunden ist, **dadurch gekennzeichnet, dass**
- die Bügelgelenkanordnung wenigstens ein Paar von Bügelgelenkkörpern enthält, welche in Richtung der ersten Schwenkachse gegeneinander versetzt angeordnet sind und mit zwei einander zuweisenden Bügelgelenkstutzen eine gemeinsame Bügelgelenkachse um die erste Schwenkachse bilden, wobei die beiden Bügelgelenkstutzen von axial entgegen gesetzten Seiten in eine Bügelgelenkbuchse eingreifen
und/oder
- die Scherengelenkanordnung wenigstens ein Paar von Scherengelenkkörpern enthält, welche in Richtung der zweiten Schwenkachse gegeneinander versetzt angeordnet sind und mit zwei einander zuweisenden Scherengelenkstutzen eine gemeinsame Scherengelenkachse um die zweite Schwenkachse bilden, wobei die beiden Scherengelenkstutzen von axial entgegen gesetzten Seiten in eine Scherengelenkbuchse eingreifen.

2. Anordnung nach Anspruch 1, **dadurch gekennzeichnet, dass** der Scherenbügel symmetrisch aufgebaut ist und Gelenkbuchsen sowohl für die Bügelgelenkanordnung als auch für die Scherengelenkanordnung einsetzbar sind.

3. Anordnung nach Anspruch 1 oder 2, **dadurch gekennzeichnet, dass** die Scherengelenkstutzen und die Bügelgelenkstutzen gleich dimensioniert sind.

4. Anordnung nach einem der Ansprüche 1 bis 3, **dadurch gekennzeichnet, dass** Bügelgelenkkörper und/oder Scherengelenkkörper als Kunststoff-Spritzgussteile ausgeführt sind.

5. Anordnung nach einem der Ansprüche 1 bis 4, **dadurch gekennzeichnet, dass** die einander zuweisenden Gelenkstutzen eines Paares von Bügelgelenkkörpern und/oder von Scherengelenkkörpern durch einen axial ausgerichteten Bolzen verbunden sind.

6. Anordnung nach Anspruch 4 und 5, **dadurch gekennzeichnet, dass** der Bolzen in ein Spritzgussteil eingebettet ist.

7. Anordnung nach einem der Ansprüche 1 bis 6, **dadurch gekennzeichnet, dass** beide Bügelgelenkkörper gleich ausgeführt und in um 180° gedrehter Position zueinander ausgerichtet sind.

8. Anordnung nach einem der Ansprüche 1 bis 7, **dadurch gekennzeichnet, dass** die Bügelgelenkkörper auf den Querbügelanordnungen befestigt sind.

9. Anordnung nach Anspruch 8, **dadurch gekennzeichnet, dass** die Bügelgelenkkörper werkzeuglos auf den Querbügelanordnungen befestigbar, insbesondere verrastbar sind.

10. Anordnung nach Anspruch 8 oder 9, **dadurch gekennzeichnet, dass** die Bügelgelenkkörper in Bohrungen der Querbügelanordnungen eingreifen.

11. Anordnung nach einem der Ansprüche 1 bis 10, **dadurch gekennzeichnet, dass** die erste Schwenkachse tiefer liegt als die Oberkante der Querbügelanordnung und in Längsrichtung neben dieser angeordnet ist.

12. Anordnung nach einem der Ansprüche 1 bis 11, **dadurch gekennzeichnet, dass** die Bügelgelenkkörper Bügelgelenkstutzen in zwei in Längsrichtung gegeneinander versetzten Position zu je einem Scherenbügel von zwei benachbarten Bügelscherenanordnungen aufweisen.

13. Anordnung nach einem der Ansprüche 1 bis 12, **dadurch gekennzeichnet, dass** die Bügelgelenkkörper in der gestreckten Stellung der Bügelscherenanordnung erste Begrenzungsanschläge für die Scherenbügel bilden und erste Gegenflächen zu ersten Anschlagflächen des Scherenbügels aufweisen, welche in der gestreckten Stellung der Bügelscherenanordnung aneinander anliegen.

14. Anordnung nach einem der Ansprüche 1 bis 13, **dadurch gekennzeichnet, dass** jedem Scherenbügel zwei axial voneinander beabstandete Paare von Bügelgelenkkörpern zugeordnet sind, welche mit axial beabstandeten Bügelgelenkbuchsen in Eingriff stehen.

15. Anordnung nach einem der Ansprüche 1 bis 14, **dadurch gekennzeichnet, dass** beide Scherengelenkkörper eines Paares gleich ausgeführt sind.

16. Anordnung nach einem der Ansprüche 1 bis 15, **dadurch gekennzeichnet, dass** die beiden Scherengelenkkörper eines Paares axial formschlüssig miteinander verbunden sind.

17. Anordnung nach Anspruch 16, **dadurch gekennzeichnet, dass** die formschlüssige Verbindung werkzeuglos herstellbar ist.

18. Anordnung nach Anspruch 16 oder 17, **dadurch gekennzeichnet, dass** die beiden Scherengelenkkörper eines Paares komplementäre Rastverbindungen aufweisen.

19. Anordnung nach einem der Ansprüche 1 bis 18, **dadurch gekennzeichnet, dass** die paarweise verbundenen Scherengelenkkörper zwei Scherengelenkachsen bilden, welche quer (x) zur Achsenrichtung (y) voneinander beabstandet sind und mit je einem Scherenbügel einer Bügelscherenanordnung verbunden sind.

20. Anordnung nach einem der Ansprüche 1 bis 19, **dadurch gekennzeichnet, dass** jedem Scherenbügel zwei axial (y) voneinander beabstandete Paare von Scherengelenkkörpern zugeordnet sind, welche mit axial beabstandeten Scherengelenkbuchsen in Eingriff stehen.

21. Anordnung nach einem der Ansprüche 1 bis 20, **dadurch gekennzeichnet, dass** die Scherengelenkkörper in der gestreckten Stellung der Bügelscherenanordnung zweite Begrenzungsanschläge für die Scherenbügel bilden und zweite Gegenflächen zu zweiten Anschlagflächen der Scherenbügel aufweisen, welche in der gestreckten Stellung der Bügelscherenanordnung aneinander anliegen.

22. Anordnung nach einem der Ansprüche 1 bis 21, **dadurch gekennzeichnet, dass** die Scherengelenkkörper eine die Scherengelenkanordnungen zu beiden Seiten der Bügelscherenanordnung überragende Deckplatte enthalten.

23. Anordnung nach Anspruch 21 und 22, **dadurch gekennzeichnet, dass** die zweiten Gegenflächen an der Unterseite der Deckplatte ausgebildet sind.
